Europäisches Patentamt

European Patent Office

Office européen des brevets

(19)

(11) Publication number:

**0 068 863**

A1

# EUROPEAN PATENT APPLICATION

(21) Application number: 82303357.6

(22) Date of filing: 25.06.82

(51) Int. Cl.³: **G 11 B 15/43,** G 11 B 15/56

(30) Priority: 01.07.81 GB 8120389

(43) Date of publication of application: 05.01.83
Bulletin 83/1

(84) Designated Contracting States: DE FR GB IT SE

(71) Applicant: **NORMALAIR-GARRETT (HOLDINGS) LIMITED, Westland Works, Yeovil Somerset (GB)**

(72) Inventor: **Henshaw, James Reynolds, 28 Mill Close, East Coker Somerset (GB)**
Inventor: **Northrop, John Frederick, 2 Broadmead Close Mosterton, Beaminster Dorset (GB)**

(74) Representative: **Jack, Bruce James et al, FORRESTER & BOEHMERT Widenmayerstrasse 4/I, D-8000 Munchen 22 (DE)**

(54) Tape transport apparatus.

(57) Reel to reel tape transport apparatus (11) comprises two tape storage reels (12, 13) arranged for rotation at the same speed so as to pass a tape (34) between the storage reels (12, 13) over record and erase heads (20, 21). Means (26, 27, 30, 31) are provided for maintaining and controlling tape tension, and for accommodating variations in reel to reel tape loop length caused by change in the relative tape pack diameters as the tape transfers from one reel to the other.

The apparatus is particularly suited for use in aircraft crash recorders.

EP 0 068 863 A1

ACTORUM AG

0068863

## Description of Invention

Title:  "~~Improvements in or Relating to~~ Tape Transport Apparatus"

THIS INVENTION relates to reel to reel tape transport apparatus.

Today it is mandatory for all large civil aircraft to carry both crash-protected data and voice recorders and for all but the smallest civil aircraft to carry crash-protected voice recorders. Dependent upon the time for which it is required that data of events preceding a crash or other incident should be available, data may be recorded on, say, 16 tracks of a tape having a length sufficient for providing storage over twenty-five hours of flying time, this being a mandatory requirement for digital data recording in large civil aircraft.  Where it is required to have available data recorded for a more limited period of time preceding a crash, such as may be the case for a cockpit voice recorder, an endless loop of tape of length sufficient for providing storage for the required time may be used.  When the storage space on the tape loop has been used up then the oldest data is wiped off and new data is recorded over this section of the tape.

A digital flight data recorder manufactured and marketed by our company provides for digital data to be recorded sequentially on 16 tracks of a tape.  Tape tension is obtained by differential springs between two spools which are mounted vertically either side of a deck. Drive is imparted to the tape by a capstan driven by a synchronous motor, two pinch rollers tensioned against the capstan trapping the tape on either side.  The tape within the captive loop thus formed is routed past the recording and replay heads and any vibration effects on the tape spools are thus isolated from that portion of the tape which is passing the heads.

A crash protected voice recorder manufactured and marketed by our company utilises a different design concept for the tape transport. It consists of a single tape stack in the form of an endless loop. The tape is drawn from the centre of the stack, passes underneath it, is returned to the plane of the stack by means of a tape turn guide, joins a co-belt which transports the tape past the erase, record and replay heads and rejoins the tape stack after passing round the capstan. The co-belt is a loop the same width as the tape which is tensioned round a series of rollers and the capstan, the tape being trapped between the belt and the capstan. The co-belt isolates vibration effects within the stack from being transmitted to the tape path past the heads, at the same time, ensuring positive contact between the tape and the heads. When tape is pulled from the stack it tries to rotate the stack at a corresponding angular speed, however, tape returning to the outside of the stack limits the rotational speed. Tape tension is imparted by the action of friction between layers of tape within the stack as each layer moves with respect to its adjacent layers.

There now exists a particular market requirement for an aircraft crash recorder which is cheap, reliable and of simple design, and that will provide for 30 minutes of digital data recording and/or 15 minutes of audio recording.

It is an object of the present invention to provide a reel to reel tape transport apparatus of simple design that fulfils a requirement of recording data over relatively short continuous periods of time and suitable for use in aircraft crash recorders.

According to the present invention reel to reel tape transport apparatus comprises means for synchronously rotating two tape storage reels so as to pass a tape over one or more tape heads and means providing and controlling tension in the tape including means for accommodating variations in tape path length.

Synchronous rotation of the tape storage reels may be provided by mechanical means such as intermeshing gear wheels having equal numbers of teeth or a toothed belt.

The means providing and controlling tape tension may comprise any suitable resiliently urged tensioning device which can maintain a substantially constant tension on the tape during both operating and storage conditions. The tape tensioning means may include an arrangement providing a multiplying factor in respect of the amount of tape loop taken up relative to movement of the tensioning device in making the take-up.

In one embodiment of the invention, tape tension is provided and controlled by passing the tape round two rollers mounted on a spring-loaded radius arm adapted for swinging about the centre of one of the tape storage reels, so as to compensate for changes in interspool tape length. A simple cantilevered blade spring may provide the necessary arm restraining force to maintain close to nominal tape tension throughout the tape length. The spring is connected to the radius arm by means of a flexible wire cable which is adjusted during assembly to give the nominal tape tension, thus ensuring tape tension is maintained under all operating and storage conditions.

In another embodiment of the invention, tape tension is provided and controlled by passing the tape around a single roller mounted on each of a pair of spring loaded radius arms adapted for swinging about the centres of the two tape storage reels. The two radius arms are constrained to operate in limited relative contra-rotation, preferably by means of their interconnection by pivoted strut means. The spring load may be applied by means of a simple cantilevered blade spring that, preferably, is folded and in contact with a roller carried on one of the radius arms so as to tend to rotate the radius arms and thereby urge the single rollers to move away from one another.

Within the limits of their synchronisation the tape storage reels are arranged to rotate freely on spindles mounted in a tape deck with which the tape transport apparatus is combined. The tape storage reels may be driven by a capstan imparting motion to the tape at a position in the tape path between the reels and, preferably, between a pair of tape heads.

To minimise variations in reel to reel tape loop length, caused in operation by changes in tape pack diameter as the tape transfers from one reel to the other, it is preferred that large diameter reels providing shallow tape storage are used.

Two embodiments of the invention will now be described, by way of example, and with reference to the accompanying drawings, in which:-

Figure 1 is a view in plan, with fragmentary section, of a tape deck having reel to reel tape transport apparatus of a first embodiment in accordance with the invention;

Figure 2 is a view in plan of a tape deck having reel to reel tape transport apparatus of a second embodiment in accordance with the invention;

Figure 3 is a diagrammatic illustration of the radius arm arrangement of a tape tensioning means as provided in a tape deck of the second embodiment; and

Figure 4 illustrates schematically a spring arrangement associated with the radius arm arrangement of Figure 4.

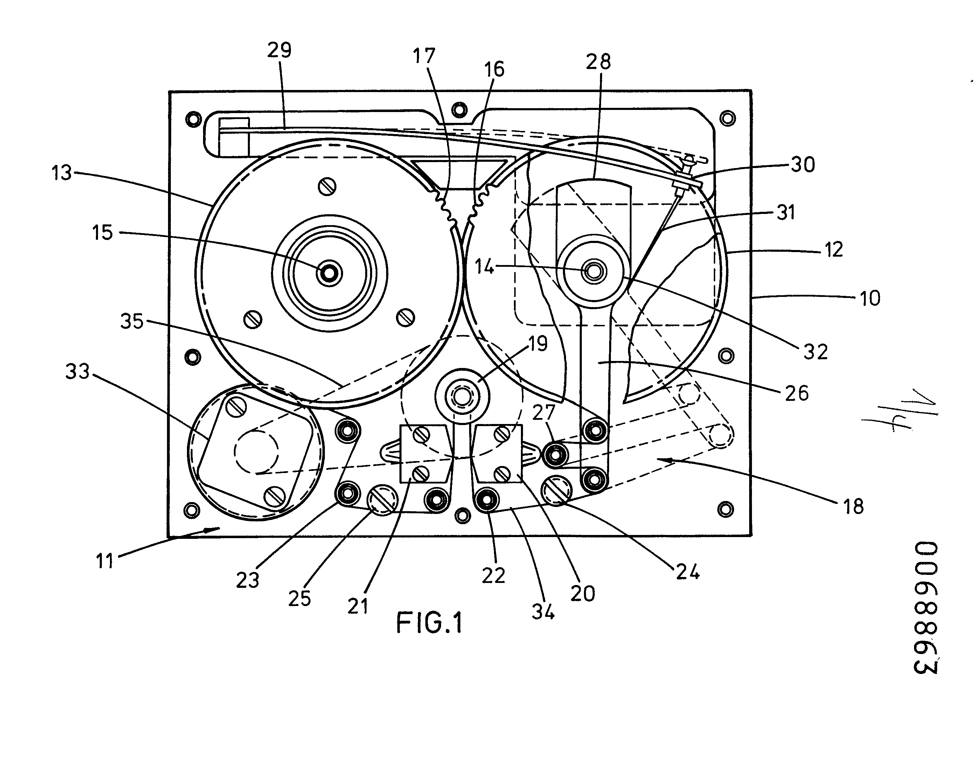

Referring to Figure 1, a tape deck 10 is provided with reel to reel tape transport apparatus 11 in accordance with the present invention. The tape transport apparatus 11 comprises a pair of tape storage reels 12 and 13 freely mounted on upstanding spindles 14 and 15, respectively, located on the tape deck 10. The reels 12 and 13 are arranged for synchronous rotation by intermeshing gear wheels 16 and 17, respectively, having equal numbers of teeth and provided on the reels 12 and 13. Both reels 12 and 13 have large diameter hubs and, relative thereto, a shallow storage capacity sufficient only for, say 10.66 m (35 feet) of tape 34.

The tape path between the reels 12 and 13 is by way of a capstan 19 and two record/erase heads 20 and 21 arranged symmetrically so that the tape wrap-around about the capstan is through an angle of 190°. The capstan 19 is provided with a local high friction area for contact with the tape. Tape guidance between the heads 20 and 21 and the reels 12 and 13 is by way of two series of rollers 22 and 23 and two flanged posts 24 and 25. The series of rollers 23 comprises three fixed rollers mounted on the tape deck 10 at one side of the capstan 19.

The series of rollers 22 comprises four rollers positioned at the other side of the capstan 19 and of which two are mounted on the tape deck 10 and two are carried on a radius arm 26 forming part of the tape tensioning means 18. The radius arm 26 is rotatable on spindle 14 at a position beneath reel 12 and enabled to move through an arc of 40°. The two rollers carried on the radius arm 26 are disposed so as to be at radii which are symmetrical of a radius whose arc projects through the centre of a tape deck mounted roller 27 which comprises one of the series of four rollers 22. The radius arm 26 is counterbalanced by a mass 28 and urged by a cantilevered blade spring 29 into movement away from the roller 27 and the tape heads 20 and 21, towards a position shown in broken line in Figure 1. The cantilevered blade spring 29 is adjustable by a flexible wire 31 attached at 30 to the blade spring 29 and having its other end portion wrapped around and secured to a hub 32 on the radius arm 26.

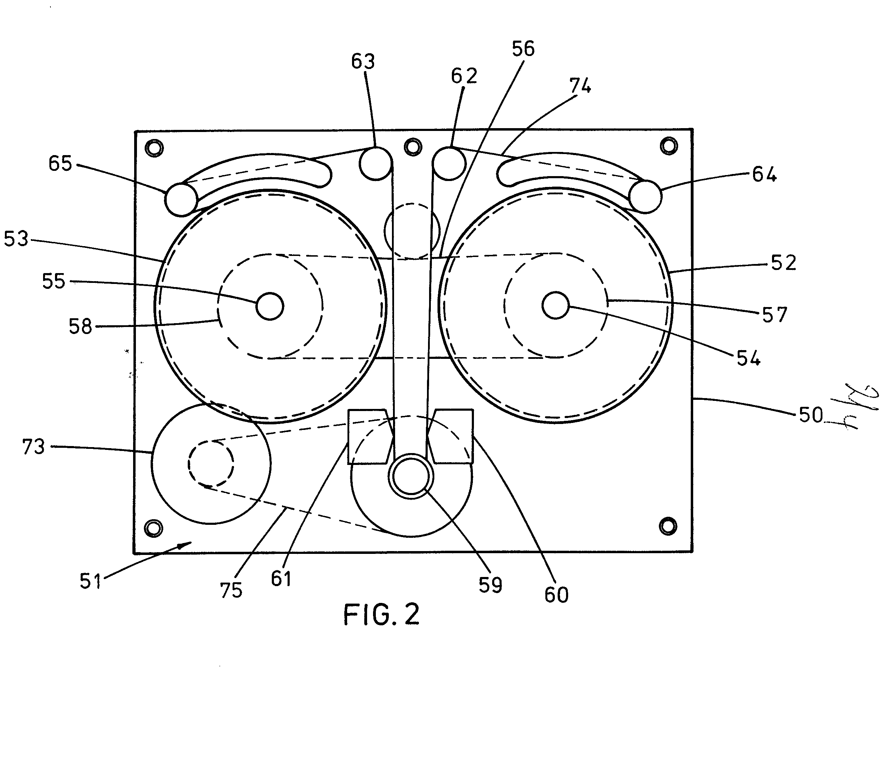

Referring now to Figures 2, 3 and 4, in description of the second embodiment, a tape deck 50 is provided with reel to reel tape transport apparatus 51 comprising a pair of tape storage reels 52 and 53 mounted on and keyed to upstanding spindles 54, 55, respectively, which are freely supported in the tape deck 50. The two reels 52, 53 are constrained to synchronous rotation by a non-extensible toothed belt 56 engaging a gear wheel 57, 58 located on the lower end of each spindle 54, 55. Both reels 52, 53 have a large diameter hub and a shallow storage capacity, similar to those of the afore-described first embodiment.

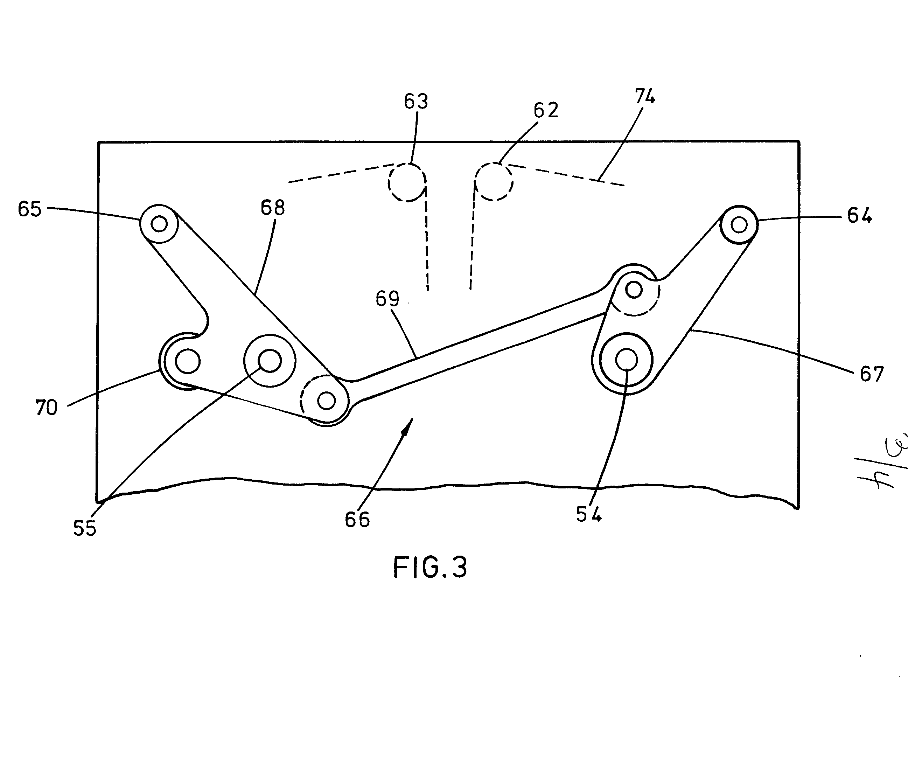

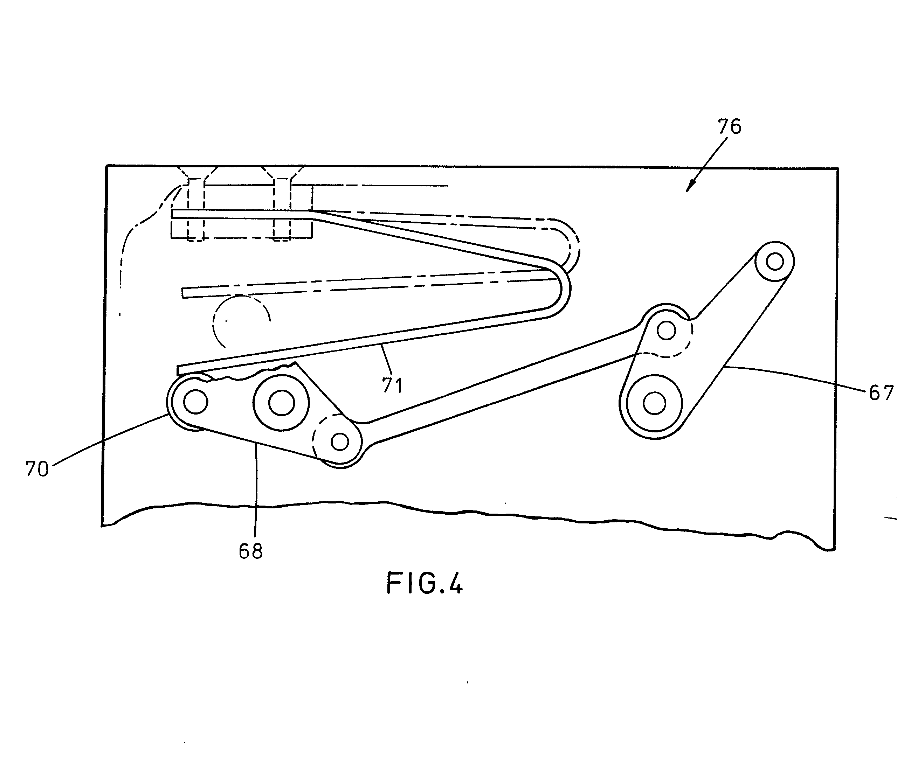

The path of a tape 74 between the reels 52, 53 is in part the same as that of the first embodiment inasmuch as it is by way of a capstan 59 and two record/erase heads 60, 61 arranged symmetrically so that the tape wrap-around about the capstan is through an angle of 190° for maximum engagement with a local high friction area thereon, whereas tape guidance between the heads 60, 61 and the reels 52, 53 is by way of a pair of fixed guide rollers 62, 63 and a pair of rollers 64, 65 mounted one on each of two radius arms 67, 68 (Figures 3 and 4) of a swinging arm arrangement 66 that forms part of a tape tensioning means 76.

The radius arms 67, 68 are rotatable on the tape reel spindles 54, 55 in a plane beneath the respective reels 52, 53 within the deck and are mechanically inter-connected by a pivoted strut 69 in a manner such that the radius arms 67, 68 are constrained towards counter rotation through symmetrical arcs of movement of 30°.

One of the radius arms, 68, is adapted to carry a roller 70 depending beneath it at a lower level in the deck. This roller is engaged by a cantilevered, folded, blade spring 71 (see Figure 4) which is fixed to the structure of the deck by suitable means, so that the reaction urges the radius arms 67 and 68 to rotate in a manner whereby the rollers 64, 65, carried by them, are moved away from one another so as to tension the tape 74. If desired the radius arm 67 which does not carry the spring reactant roller 70 may be mass balanced correspondingly to its companion arm 68 in order to reduce the effects of dynamic loading which may be effective upon the deck 50 when in use.

Referring now to the embodiments of both Figure 1 and Figure 2, the capstans 19, 59 are each driven by a servo-controlled D.C. motor 33, 73 to which it is coupled by means of a positive drive provided by a non-extensible, toothed, polymide belt 35, 75. Velocity feedback is provided by means of an optical tachometer arrangement (not shown) of which the tachometer is mounted on the drive shaft of the motor 33, 73 and based on a 200 line etched metal disc.

Beginning and end of tape sensing (not shown) is provided by light sources and photo cells working in conjunction with light reflective markers mounted on the spool hubs.

In these embodiments the tape transport magazine provides a continuous, say, 30-minute digital data history by recycling tape from one spool to the other. By using a nominally 12.5 mm (0.5 inch) wide tape that has an eight track capability and a transfer length of nominally 9.15 m (30 feet), and feeding at a tape speed of nominally 2 cm (0.8 inches) per second, four tape passes of 7.5 minutes duration can be made in completing each recording cycle.

In operation, tape motion in both embodiments is provided by the motor 33, 73 driving the capstan 19, 59 in whichever direction is appropriate to the pertaining tape pass within an event cycle. Reversal of the motor at the end of each pass is provided by the beginning and end of tape sensing light sources and photo cells in operable association with the reflective markers mounted on the tape reel hubs (not shown), whilst the speed of rotation of the motor 33 is controlled by means of the optical tachometer arrangement (not shown).

Motion of the tape 34 or 74 drives whichever of the tape storage reels in the reel combination 12, 52 or 13, 53 is currently acting as the tape feeder. The feeder reel synchronously drives its associating reel at the same rotational speed, which acts as the tape take-up, by means of the intermeshing gear wheels 16 and 17, or the toothed belt 56.

Variations in reel to reel tape loop length, caused by change in the relative tape pack diameters as the tape transfers from one reel to the other, is minimised by the small ratio of, say in Figure 1, 1:1.1 of the minimum to maximum tape pack diameters which are obtained by the large hub diameter to small storage facility relationship of each reel. However, because the reels are constrained to rotate at the same speed, it is only at the mid-point of a recording cycle that the two tape packs are of the same diameter and the rate of tape acceptance at the take-up reel is the same as the rate of tape delivery from the feeder reel. At commencement of a recording cycle when the tape pack diameter on the feeder reel exceeds the nominal hub diameter of the take-up reel, the delivery rate is higher than the acceptance rate and consequently a loop of tape tends to develop in the tape path between the reels and this increases in length up to the mid-point of the tape transfer, whereafter the variation in diameter of the tape pack diameters reverses and the feeder reel becomes less and less able to deliver tape at a rate commensurate with the acceptance rate of the take-up reel until at completion of the transfer at 'tape-end', the tape path length has reduced again to that which existed at the commencement of the recording cycle. This phenomenon is accommodated by the tape tensioning means 18 or 76 in the two embodiments providing a tape reservoir that maintains a substantially constant tension in the tape irrespective of the pertaining length of the loop of tape.

In the embodiment of Figure 1, the blade spring 30 puts a tensile load into the flexible wire 31 such that it tends to rotate the radius arm 26 into a counter-clockwise direction which urges the two rollers mounted on the arm towards tracking in this same direction, so as to draw any developing loop of tape from around the fixed roller of the series of rollers 22 and maintain the tape in a state of tension. By drawing the loop of tape by means of the two rollers on the radius arm 26 a multiplying factor is provided whereby the take-up length of the loop is double the travel of the rollers.

Such a state of tension is maintained in the embodiment of Figures 2, 3 and 4 in a similar manner by the blade spring 71 bearing on roller 70 of the radius arm 68 so as to urge this towards counter clockwise rotation (as seen in Figure 3) and, by the manner of the interconnection through the pivoted strut 69, urge radius arm 67 towards clockwise direction whereby the rollers 64, 65 are urged from one another against the limiting constraint imposed by the extent of the tape loop.

Both tape tensioning means maintain the tape in a tensioned state at, substantially, a predetermined value throughout the entire tape path length at all times of operation and storage. Consequently, there is no delay in establishing tension following power-up and, since tension is maintained following removal of power, an accidental power loss cannot cause damage to the tape.

Tape transport apparatus in accordance with the present invention permits the tape tension value to remain substantially unaffected by acceleration and deceleration of the tape and, in the described embodiments, permits instant start-up to, or stopping from 25.5 cms/second (10 inches/second) tape velocity in 50 milliseconds without detrimental change in tape tension.

Because of the positive means of its dynamic connections no spool braking system is required, which imparts considerable advantages in less complexity and mass with consequent improved reliability giving a reduced maintenance requirement.

Externally imposed accelerations on the recorders have little or no effect on the tape tension or velocity. By appropriately balancing the radius arms (e.g. arm 26 with the mass 28), translational acceleration effects are completely eliminated; whilst angular accelerations have only a second order effect because of their very slight influence on the radius arms. Use of synchronous rotating tape storage reels 12, 13 or 53, 54 through engagement of their gear wheels 16 or toothed belt 56, respectively, ensures by their counter-rotation that they remain undisturbed by such accelerations.

An advantage of using two radius arms will be apparent in that, for the same arcuate movement, double the amount of tape can be transferred without incurring any operating penalty beyond the additional weight and perhaps spatial requirement to accommodate the second radius arm, so that doubling the period of time for recording or doubling the tape speed for the unit period of time can be accomplished.

CLAIMS

1. Reel to reel tape transport apparatus comprising means for synchronously rotating two tape storage reels so as to pass a tape over one or more tape heads and means providing and controlling tension in the tape including means for accommodating variations in tape path length.

2. Tape transport apparatus as claimed in Claim 1 wherein said means for synchronously rotating the two tape storage reels comprise mechanical means coupling the tape storage reels.

3. Tape transport apparatus as claimed in Claim 2 wherein the mechanical means comprises intermeshing gear wheels.

4. Tape transport apparatus as claimed in Claim 2 wherein the mechanical means comprises a toothed belt engaging with gear wheels on spindles carrying the tape storage reels.

5. Tape transport apparatus as claimed in any one of Claims 1, 2 or 3 wherein tape tension is provided and controlled by passing the tape round two rollers mounted on a spring-loaded radius arm adapted for swinging about the centre of one of the tape storage reels.

6. Tape transport apparatus as claimed in Claim 5 wherein a restraining force for maintaining close to nominal tape tension throughout the tape length is applied to the radius arm by a cantilever blade spring.

7. Tape transport apparatus as claimed in any one of Claims 1, 2 or 4 wherein tape tension is provided and controlled by passing the tape around a single roller mounted on each of a pair of spring-loaded radius arms adapted for swinging one about each of the centres of the tape storage reels and constrained to operate in limited contra-rotation.

8.    Tape transport apparatus as claimed in Claim 7 wherein a restraining force for maintaining close to nominal tape tension throughout the tape length is applied to the radius arms by a cantilever blade spring in contact with a second roller carried on one of the radius arms.

FIG.1

FIG. 2

0068863

FIG.3

3/4

0068863

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | IBM TECHNICAL DISCLOSURE BULLETIN, vol. 15, no. 1, June 1972, pages 128-129, New York (USA); L.R.BEACH et al.: "Low-cost reel-to-reel tape transport". *Page 128,129; figures* | 1,2,5 | G 11 B 15/43 <br> G 11 B 15/56 |
| | --- | | |
| X | US-A-3 367 591 (K.LEGROS) *Column 1, lines 39-61; column 2, line 65 to column 5, line 29; figures* | 1,5 | |
| | --- | | |
| X | US-A-3 187 165 (F.J.L.TURNER) *Column 2, lines 15-39; column 2, line 67 to column 3, line 5; figures* | 1,2 | |
| | --- | | |
| X | US-A-2 730 309 (J.S.BAER) *Column 2, line 6-39; column 3, lines 31-73; figures* | 1,2,4 | TECHNICAL FIELDS SEARCHED (Int. Cl. ³) <br><br> G 11 B |
| | --- | | |
| A | GB-A-1 287 060 (WESTINGHOUSE) *Claims 1,3,4; figures* | 1-3 | |
| | --- | | |
| A | WO-A-8 002 330 (YOUNG) *Claim 1; figures* | 1,2,4 | |
| | --- | | |
| A | US-A-3 924 177 (J.LEMINEUR) *Column 2, line 32-36; figures 1,3* | 5,7 | |
| | --- | | |
| | -/- | | |

The present search report has been drawn up for all claims

| Place of search | Date of completion of the search | Examiner |
|---|---|---|
| THE HAGUE | 08-10-1982 | DECLAT M.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

## DOCUMENTS CONSIDERED TO BE RELEVANT

Page  2

| Category | Citation of document with indication, where appropriate, of relevant passages | Relevant to claim | CLASSIFICATION OF THE APPLICATION (Int. Cl. ³) |
|---|---|---|---|
| A | DE-A-1 549 118  (VEB KOMBINAT) *Figure* | 5,7 | |
| | ----- | | |
| | | | TECHNICAL FIELDS SEARCHED (Int. Cl. ³) |

The present search report has been drawn up for all claims

| Place of search THE HAGUE | Date of completion of the search 08-10-1982 | Examiner DECLAT M.G. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO Form 1503. 03.82